(19) **Europäisches Patentamt**
**European Patent Office**
**Office européen des brevets**

(11) **EP 2 543 541 B1**

(12) **EUROPEAN PATENT SPECIFICATION**

(45) Date of publication and mention
of the grant of the patent:
**27.02.2019 Bulletin 2019/09**

(51) Int Cl.:
***B60Q 1/10*** *(2006.01)*

(21) Application number: **12172770.5**

(22) Date of filing: **20.06.2012**

(54) **Optical axis controller of automotive headlamp**

Steuergerät zur Regelung der optischen Achse von Kraftfahrzeugscheinwerfern

Unité de contrôle de l'axe optique d'un phare de véhicule

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **04.07.2011 JP 2011148515
04.07.2011 JP 2011148516
04.07.2011 JP 2011148517**

(43) Date of publication of application:
**09.01.2013 Bulletin 2013/02**

(73) Proprietor: **Mitsubishi Jidosha Kogyo Kabushiki Kaisha
Tokyo 108 (JP)**

(72) Inventors:
• **Hayashi, Norikazu
Tokyo, 108-8410 (JP)**

• **Yahata, Yoshitaka
Tokyo, 108-8410 (JP)**
• **Hirukawa, Masataka
Tokyo, 108-8410 (JP)**
• **Ishizuka, Masataka
Tokyo, 108-8410 (JP)**

(74) Representative: **Regimbeau
20, rue de Chazelles
75847 Paris Cedex 17 (FR)**

(56) References cited:
EP-A2- 1 205 348         DE-A1-102009 041 385
JP-A- 2008 068 756      US-A- 5 877 680
US-B1- 6 302 553         US-B1- 6 445 085

EP 2 543 541 B1

**Description**

<u>FIELD</u>

The present invention relates to an optical axis controller which automatically controls the optic angle of an automotive headlamp.

<u>BACKGROUND</u>

Optical axis controllers are known which automatically tilt (control) the optic angle of automotive headlamps in response to variable postures of vehicles. The headlamp controlled by the optical axis controller is provided with an actuator which vertically and horizontally moves a light source and a reflector to adjust the optic angle. For example, if an increase in number of persons in the vehicle lowers the height of the vehicle and shifts the radiation point of the headlamp toward the road surface, the optical axis controller decreases the optic angle (depression angle) to make light irradiate further and keep the illumination distance of the light. Such an optical axis controller is also referred to as an auto leveling apparatus.

Such optical axis controllers are categorized into dynamic controllers and static controllers. The former controls the optic angle on a real-time basis under all conditions including a moving vehicle. For example, the controller adjusts the illumination distance in response to postural changes caused by acceleration and deceleration of the vehicle.

Unfortunately, the dynamic optical axis controller often drives the actuator, which consumes a large amount of electric power, and requires high durability of components for driving the light source and the reflector. This may cause high costs of production and maintenance, resulting in low cost efficiency.

On the contrary, the latter controls the optic angle mainly when the vehicle stops. For example, the controller adjusts the illumination distance in response to changes in number of persons and load when the vehicle stops . The static optical axis controller does not often drive the actuator, which consumes less electric power than the dynamic one. For durability, this type of controller can keep enough strength and quality using general purpose components. The illumination distance, however, is not controlled even when the posture of running vehicle varies; hence, the static type is less convenient compared to the dynamic type.

In recent years, a static optical axis controller has been proposed, which can adjust the optic angle even when the vehicle is running, aiming at solving the above-described inconvenience. For example, Patent Literature 1 (Japanese Laid-open Patent Application No. 2009-248627) discloses a condition to start the correction of the optical axis of the headlamp, i.e., the vibration amplitude and the engine speed of a vehicle. This technique starts to correct the optical axis of the headlamp during the constant-speed running without vibration of the vehicle at low speed even when the vehicle is running. Thus, determining a suitable running state for the static controller for correcting the optical axis of the headlamp can reduce the production cost and improve convenience.

US 6,445,085 B1 discloses an other example of optical axis controller.

Unfortunately, such a static controller of the headlamp cannot accurately determine a proper running state for correcting the optical axis of the headlamp. For example, in the case of the determination of the running state based on the engine speed as is disclosed in Patent Literature 1, the posture of the vehicle is stable during the constant-speed running on an expressway even at a considerably high engine speed, while the vehicle has an unstable posture with inclination in the anteroposterior direction (with longitudinal inclination) just after the vehicle starts running or just before the vehicle stops even at a low engine speed. Thus, it is difficult to accurately determine, on the basis of the engine speed, the running state which does not interfere with the correction of the optical axis. Accordingly, conventional optical axis controllers of headlamps cannot improve the accuracy for determining the running state of the vehicle.

<u>SUMMARY</u>

<u>TECHNICAL PROBLEMS</u>

An object of the present invention is to provide an optical axis controlling apparatus of an automotive headlamp which can accurately determine a running state suitable for correcting the optical axis of the headlamp. It should be noted that, beside this object, functional effects led by each configuration shown in the embodiments described below, and advantageous effects which are not attained in conventional techniques can be regarded as other objects of the present invention.

<u>SOLUTION TO PLOBLEMS</u>

(1) According to the invention, the problem is solved by an optical axis controller as defined in claim 1.

An optical axis controlling apparatus of an automotive headlamp disclosed herein includes an adjuster which adjusts the optic angle of the automotive headlamp, and a drive torque calculator which calculates the drive torque applied to drive wheels of a vehicle. The apparatus further includes a determiner which determines, on the basis of the drive torque, whether the vehicle is in a static running state or in a dynamic running state. The apparatus further includes a controller which permits the adjuster to adjust the optic angle if the determiner determines that the vehicle is in the static running state, and does not permit the adjuster to adjust the optic angle if the determiner determines that the vehicle is in the dynamic running state.

The term "static running state" used herein refers to a state of a vehicle running while substantially keeping its stopping posture in a pitch direction. The term "dynamic running state" used herein refers to running states other than the "static running state", in which the vehicle does not always keep its stopping posture in the pitch direction. These states are the running states of the vehicle and do not include a stop state of the vehicle.

(2) The determiner determines that the vehicle is in the static running state if a value of the drive torque is within a first predetermined range (first range); otherwise the determiner determines that the vehicle is in the dynamic running state.

(3) The apparatus further includes a resistance torque calculator which calculates a resistance torque when the vehicle is running. In this case, the determiner preferably determines, on the basis of the resistance torque, whether the vehicle is in the static running state or in the dynamic running state.

(4) The apparatus further includes a pitch-influencing torque calculator which calculates a pitch-influencing torque obtained by subtracting the resistance torque from the drive torque. In this case, the determiner preferably determines that the vehicle is in the static running state if a value of the pitch-influencing torque is within a second predetermined range (second range), otherwise the determiner determines that the vehicle is in the dynamic running state.

(5 The apparatus further includes a roll angle calculator which calculates a roll angle when the vehicle is running. In this case, the determiner preferably determines, on the basis of the roll angle, whether the vehicle is in the static running state or in the dynamic running state.

(6) The determiner determines that the vehicle is in the static running state if a value of the roll angle is within a third predetermined range (third range).

(7) The apparatus further includes a pitch-influencing torque calculator which calculates a pitch-influencing torque obtained by subtracting the resistance torque from the drive torque. In this case, the determiner determines that the vehicle is in the static running state if the value of the roll angle is within the third predetermined range (third range) and a value of the pitch-influencing torque is within a second predetermined range (second range), otherwise the determiner determines that the vehicle is in the dynamic running state.

(8) Preferably, the drive torque calculator calculates the drive torque on the basis of a change gear ratio between an engine and the drive wheels (a change gear ratio of an engine to the drive wheels), and an engine torque provided by the engine. For example, in an automotive vehicle and a hybrid automotive vehicle having a transmission between the engine and the drive wheels, the change gear ratio is obtained on the basis of the operating condition of the transmission.

(9) Preferably, the drive torque calculator calculates the drive torque on the basis of a motor torque provided by a traction motor. For example, in an electric automotive vehicle without the transmission, the drive torque is obtained on the basis of the motor torque.

(10) Alternatively, the drive torque calculator preferably calculates the drive torque on the basis of a change gear ratio and the motor torque. The change gear ratio is a ratio between the traction motor and the drive wheels (a ratio of the traction motor to the drive wheels) . For example, in an electric automotive vehicle having a transmission between the traction motor and the drive wheels, the drive torque is obtained on the basis of the change gear ratio and the motor torque.

ADVANTAGEOUS EFFECTS

The disclosed optical axis controller of an automotive headlamp can accurately determine suitable running states for correcting an optical axis by using a drive torque of drive wheels as a state for permitting or not permitting to adjust an optic angle. For example, compared to a method for determining a running state using an engine speed, the controller can determine the running states at high accuracy, which can expand the lifetime of the components used for the adjustment of the optic angle, and can enhance the convenience without increasing production costs.

BRIEF DESCRIPTION OF DRAWINGS

The nature of this invention, as well as other objects and advantages thereof, will be explained in the following with reference to the accompanying drawings, in which like reference characters designate the same or similar parts throughout the figures and wherein:

FIG. 1 is a side view exemplary illustrating a vehicle which includes an optical axis controller in accordance with a first embodiment.
FIG. 2 is a block diagram illustrating the configuration of the optical axis controller of FIG. 1.
FIG. 3 is a graph for illustrating control of the optical axis controller of FIG. 1.
FIG. 4 is a flowchart illustrating a control procedure in the optical axis controller of FIG. 1.
FIG. 5 is a block diagram illustrating a configuration of an optical axis controller in accordance with a second embodiment.
FIG. 6 is a block diagram illustrating a calculation in the optical axis controller of FIG. 5.
FIG. 7 is a graph for illustrating control of the optical axis controller of FIG. 5.
FIG. 8 is a flowchart illustrating the control procedure of the optical axis controller of FIG. 5.
FIG. 9 is a block diagram illustrating a configuration of an optical axis controller in accordance with a third embodiment.
FIG. 10 is a block diagram illustrating a calculation of the optical axis controller of FIG. 9.
FIG. 11 is a graph for illustrating control of the optical axis controller of FIG. 9.
FIG. 12 is a flowchart illustrating a control procedure of the optical axis controller of FIG. 9.

DESCRIPTION OF EMBODIMENTS

An optical axis controlling apparatus (hereinafter optical axis controller) of an automotive headlamp will now be described with reference to the attached drawings.

[I. First embodiment]

[1. Apparatus Configuration]

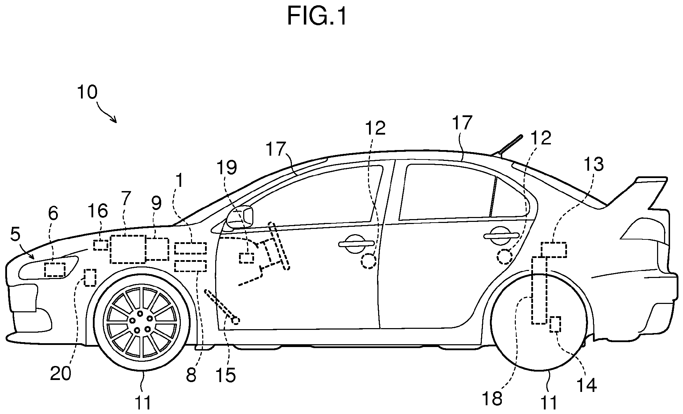

An optical axis controller of an automotive headlamp in accordance with the first embodiment is installed in a vehicle 10 shown in FIG. 1. The vehicle 10 is a gasoline-powered vehicle driven by an engine 7. The engine 7 generates drive force, which is transmitted to drive wheels among wheels 11 via a transmission (gearbox) 9 and a drive force transmitting path (not shown).

In addition, the vehicle 10 includes a pair of left and right headlamps 5 at the front face. Each headlamp 5 includes an actuator 6 (adjuster) for adjusting the radiation direction. The actuator 6 adjusts the optic angle in response to the posture of the vehicle 10.

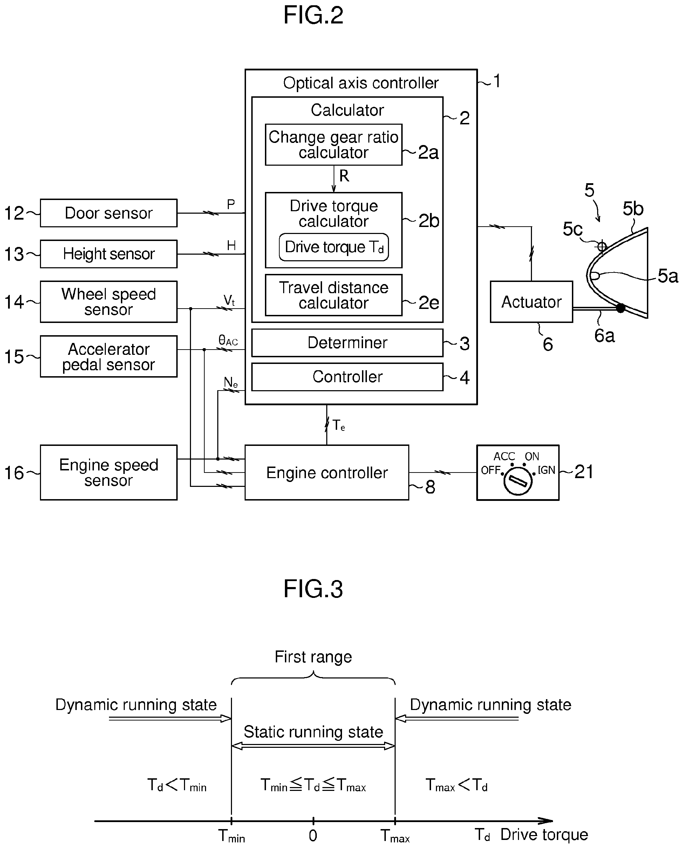

For example, as schematically shown in FIG. 2, the headlamp 5 includes a vertically movable reflector 5b which is disposed around a light source 5a. The reflector 5b has an axis 5c along the lateral direction of the vehicle 10. The actuator 6, which expands or contracts horizontally (anteroposterior direction of the vehicle), includes a rod 6a having a distal end connected to the reflector 5b. Such a structure allows the rod 6a to slide in the horizontal direction in response to the expansion or contraction, which moves the reflector 5b to vertically adjust the optic angle. Note that the actuator 6, which drives the rod 6a, is controlled by an optical axis controller 1 (described below).

The actuator 6 of the present embodiment is an adjuster which adjusts the optic angle not only when the vehicle 10 is stopping (during the stop mode of the vehicle 10), but also when the vehicle 10 is running (during the running mode of the vehicle) . It should be noted that the actuator 6 is controlled such that it does not unlimitedly adjust the optic angle, but adjusts the optic angle only at a suitable states for correction of the optical axis during the running mode of the vehicle 10. Although this description describes the actuator 6 which vertically adjusts the direction of the optical axis, the optical axis can be adjusted in any other direction, for example, a widthwise direction (crosswise direction).

The vehicle 10 includes the optical axis controller 1 and an engine controller 8. The optical axis controller 1 is an electronic controller which controls the headlamp 5, while the engine controller 8 is an electronic controller which controls the engine 7. These controllers are, for example, LSI devices or built-in electronic devices, which include microprocessor, ROM, RAM and other devices, and these are connected one another via a communication network (communication line such as CAN, FlexRay) which is provided to the vehicle 10. These controllers are driven when the operation position of an ignition switch 21 is at an accessory position or at an on-position (positions when the engine 7 is operating) and start respective control.

The engine controller 8 is an electronic controller which controls various systems relating to the engine 7, such as an ignition system, a fuel system, an air intake and exhaust system, and a valve train. The engine controller 8 controls the inhaled air volume, the fuel injection rate, and the ignition timing of individual cylinders of the engine 7 in response to an output requirement by a driver or other parameters. The engine 7 also includes an engine speed sensor 16 which detects the engine speed $N_e$. The information on the engine speed $N_e$ is transmitted to the optical axis controller 1 and the engine controller 8.

The engine controller 8 calculates, at any time, the engine torque $T_e$ output from the engine 7 using a predetermined calculation process on the basis of an amount of an accelerator pedal operation $\theta_{Ac}$ detected by an accelerator pedal sensor 15 (described below), the wheel speed $V_t$ detected by a wheel speed sensor 14, the fuel injection rate, an engine speed $N_e$, and other parameters . The engine torque $T_e$ is, for example, a value of torque output from an output shaft of the engine 7. Possibly the engine torque $T_e$ is a value of torque input to the transmission 9 from the engine 7. The information on the engine torque $T_e$ calculated here is transmitted to the optical axis controller 1. Note that the engine torque $T_e$ is also used for controlling the engine 7.

The optical axis controller 1 is an electronic controller which controls the light intensity, the light distribution state, the optic angle, and other parameters of the headlamp 5. As shown in FIG. 2, the input terminals of the optical axis controller 1 is connected to the above described engine controller 8, a door sensor 12, a height sensor 13, the wheel speed sensor 14, and the accelerator pedal sensor 15.

The door sensors 12 are open/close sensors (binary sensors) provided to individual doors 17 on both sides of the vehicle 10, which detect (or calculate) the open/close state of doors 17 to output open/close signals P (binary signal P). These open/close signals P are transmitted to the optical axis controller 1.

The height sensor 13 is a sensor provided to a suspension system by which wheels 11 are suspended from the vehicle, which detects a vehicle height H corresponding to the expansion and contraction amount of a suspension spring 18. Although FIG. 1 shows only one height sensor 13 provided to the suspension system of a rear wheel of the vehicle 10, the individual height sensors 13 can be provided for each suspension system of a front wheel and a rear wheel, or the individual height sensors 13 can be provided for the suspension systems of all wheels 11.

The height sensor 13 detects (or calculates) a vehicle height H which is a parameter corresponding to the height from the ground at point where the height sensor 13 is provided. In other words, it is a parameter corresponding to the tilt angle in the pitch direction of the vehicle 10. The variation in the vehicle height H corresponds to the vibration of the vehicle. As the vibration increases, a variation in vibration amplitude with time and the variation frequency (vibration speed) of the vehicle height H increase. The information on the vehicle height H detected here is transmitted to the optical axis controller 1 as an indicator for obtaining the posture and the vibration state of the vehicle 10.

The wheel speed sensor 14 detects (or calculates) the rotation angle and its angular rate of a shaft which supports wheels 11. The variation in the rotation angle of the shaft per unit time is proportional to the rotation speed of the wheels 11. The rotation speed of the wheels 11 is proportional to the wheel speed $V_t$ (vehicle speed) without skidding. The information on the wheel speed $V_t$ detected (or calculated) here is transmitted to the optical axis controller 1 and the engine controller 8. Note that the wheel speed $V_t$ can be calculated by the optical axis controller 1 on the basis of a rotation angle of the wheel shaft detected by the wheel speed sensor 14.

The accelerator pedal sensor 15 is a stroke sensor which detects (or calculates) the amount of an operation $\theta_{AC}$ corresponding to the amount of pushing of an accelerator pedal (the amount of accelerator pedal operation). The operation amount $\theta_{AC}$ of the accelerator pedal is a parameter corresponding to the request of speed-up by the driver. In other words it corresponds to the output requirement to the engine 7. The information on the amount of operation $\theta_{AC}$ detected here is transmitted to the optical axis controller 1 and the engine controller 8

In addition, a rudder angle sensor 19 and a yaw rate sensor 20 are provided to the vehicle 10 at an arbitrary place. The rudder angle sensor 19 detects the steering angle $\theta_{ST}$ (or the rudder angle of a steering wheel), while the yaw rate sensor 20 detects the yaw rate Y which is applied to the vehicle 10. The yaw rate Y is a turn speed of the vehicle 10 (angular rate of turning movement in the horizontal plane) about the vertical axis. The information on the rudder angle $\theta_{ST}$ and the yaw rate Y detected by these sensors is transmitted to the optical axis controller 1.

[2. Control Configuration]

[2-1. Outline of Control]

The output side of the optical axis controller 1 is connected to the above described actuator 6. The optical axis controller 1 of the present embodiment controls the optical axis of the headlamp 5 on the basis of the input information. The control of the optical axis automatically adjusts the tilt of the optic angle (depression angle) of the headlamp 5 by controlling the operation amount (expansion and contraction amount of the rod 6a) of the actuator 6 in response to the posture of the vehicle 10.

In particular, this control includes estimating the pitch angle $\theta_p$ of the vehicle 10 (the tilt of the anteroposterior direction) on the basis of the vehicle height H detected by the height sensor 13, driving the rod 6a of the actuator 6 in accordance with the estimated pitch angle $\theta_p$ so as to keep the illumination distance. For example, the standard state is set when the vehicle 10 stops on the leveled road surface. The actuator 6 is driven to decrease the optic angle such that the pitch angle $\theta_p$ increases, and to increase optic angle such that the pitch angle $\theta_p$ decreases. In other words, the control drives the rod 6a of the actuator 6 to turn up the radiation direction when the vehicle takes a posture with a leaning forward, and to turn down radiation direction when the vehicle takes a posture with a leaning backward.

In the present embodiment, the vehicle 10 has the following three states. The optical axis controller 1 controls the optical axis when the vehicle 10 is in the state of (1) or (2).

(1) the state in which the vehicle 10 stops.
(2) the state in which the vehicle 10 is running
in the static running state.
(3) the state in which the vehicle 10 is running
in the dynamic running state.

The above described state (1) includes, for example, when the vehicle 10 stops with idling just after the engine 7 starts, and when the vehicle 10 stops with people getting in and getting out. On the other hand, the stop of the vehicle 10 after running (for example, temporary stop for waiting at the signal light) can be considered not to be included in the state (1) because the number of persons and loads do not change so that the posture of the vehicle 10 does not change (the state in which the optical axis is not controlled).

The above state (2) includes, for example, a running mode at a constant speed (steady running, auto cruse, and so on) . The static running state is a running state of the vehicle 10 with keeping its stopping posture (stopping state) in the pitch direction. In other words, the optic angle is adjusted in relatively stable running states in which the posture in the pitch direction on the road surface is substantially same as its stopping posture, and the posture is not dynamically changed and kept for a certain time.

On the contrary, the above state (3) corresponds to running states other than the state (2). In other words, the optic angle is not adjusted in relatively unstable states in which the posture of the vehicle 10 is dynamically changed (or may be changed).

[2-2. Control Block Configuration]

As shown in FIG. 2, the optical axis controller 1 includes a calculator 2, a determiner 3, and a controller 4. Each function of the calculator 2, the determiner 3, and the controller 4 can be carried out by electronic circuits (hardware), or can be programed as software. Alternatively, some functions can be provided as hardware, and the others can be provided as software.

The calculator 2, which performs the calculation relating to control of the optical axis, includes a change gear ratio calculator 2a, a drive torque calculator 2b, and a travel distance calculator 2e.

The change gear ratio calculator 2a calculates the change gear ratio R between the engine 7 and the drive wheels. The change gear ratio R, which is a parameter corresponding to the ratio of the drive torque $T_d$ of the drive wheels to the engine torque $T_e$, corresponds to the gear ratio of the transmission 9. The change gear ratio calculator 2a calculates the change gear ratio R on the basis of the engine speed $N_e$ and the wheel speed $V_t$. The information on the change gear ratio R calculated by the change gear ratio calculator is transmitted to the drive torque calculator 2b. If the engine controller 8 stores the operating state of the transmission 9, the engine controller 8 can transmit the change gear ratio R to the drive torque calculator 2b.

The drive torque calculator 2b calculates the drive torque $T_d$ of the vehicle 10, which is applied to the drive wheels. The drive torque calculator 2b calculates the drive torque $T_d$ of the vehicle 10 on the basis of the engine torque $T_e$ transmitted from the engine controller 8, and the change gear ratio R transmitted from the change gear ratio calculator 2a.

The value of the drive torque $T_d$ is calculated from, for example, Equation 1 described below. In the Equation 1, the drive torque $T_d$ is obtained by multiplying the engine torque $T_e$ by the change gear ratio R. The information on the drive torque $T_d$ calculated by the drive torque calculator 2b is transmitted to the determiner 3.

$$\text{(drive torque } T_d)$$
$$= \text{(engine torque } T_e) \times \text{(change gear ratio R)} \quad \text{...... (Eq.1)}$$

The travel distance calculator 2e calculates the travel distance L of the vehicle 10 on the basis of the wheel speed $V_t$. The travel distance L is a distance the vehicle 10 moves from the point where the ignition switch 21 of the vehicle 10 is turned on. When any door 17 of the vehicle 10 opens, the travel distance L is reset. The travel distance L corresponds to a distance the vehicle 10 moves without changing the number of persons and loads in the vehicle 10.

The information on the travel distance L calculated by the travel distance calculator 2e is transmitted to the controller 4.

The determiner 3 determines the running states of the vehicle 10, that is a static running state or a dynamic running state, on the basis of the drive torque $T_d$ calculated by the drive torque calculator 2b. In other words, the determiner 3 determines whether the running state of the vehicle 10 is the state (2) or the state (3). The determiner 3 previously stores a map or an arithmetic expression, which defines the correspondence relation between the value of the drive torque $T_d$ and the state of the vehicle 10, and determines the state of the vehicle 10 using the map or the arithmetic expression or the like.

For example, as shown in FIG. 3, the determiner 3 determines that the running state of the vehicle 10 is dynamic when the value of the drive torque $T_d$ is bigger than the predetermined positive value $T_{max}$ or smaller than the predetermined negative value $T_{min}$, and determines that the running state of the vehicle 10 is static when the value of the drive torque $T_d$ is within a range from $T_{min}$ to $T_{max}$ (within the first range) . Note that the positive torque corresponds to the forward driving force of the vehicle 10, while the negative torque corresponds to the backward driving force of the vehicle 10. The information on the running state of the vehicle 10 determined by the determiner 3 is transmitted to the controller 4.

The controller 4 controls the optical axis on the basis of the travel distance L calculated by the travel distance calculator 2e and open/close signals P from the door sensor 12, the result determined by determiner 3 and other parameters.

If the vehicle stops and the travel distance L is L=0, the state of the vehicle 10 is (1), so that the controller 4 controls the optical axis. For example, when the vehicle 10 stops with the ignition switch 21 being at an accessory position, or with idling just after the engine 7 starts, the controller 4 performs the auto leveling in response to a varying posture of the vehicle 10.

Unless the travel distance L is zero, the controller 4 does not control the optical axis even when the vehicle 10 stops. For example, when the vehicle 10 temporary stops for waiting at the signal light after the vehicle 10 starts running, the posture of the vehicle 10 is not regarded as a change from the posture before the vehicle 10 starts running so that the controller 4 forbids to control the optical axis to keep the actuator 6 at the position during the stop mode of the vehicle 10.

While the vehicle is running, the controller 4 controls the optical axis when the vehicle 10 is in a static running state, while does not control the optical axis when the vehicle 10 is in a dynamic running state. In other words, the controller 3 performs the auto leveling when the vehicle 10 is in the state (2), while it does not perform the auto leveling control when the vehicle 10 is in the state (3) .

Note that in the control of the optical axis, the pitch angle $\theta_p$ of the vehicle 10 is estimated on the basis of the vehicle height H detected by the height sensor 13. The controller 4 transmits a drive signal to the actuator 6 in response to the estimated pitch angle $\theta_p$, which automatically adjusts the optic angle of the headlamp 5 to keep the illumination distance.

[3. Flowchart]

[3-1. Calculation of Travel distance]

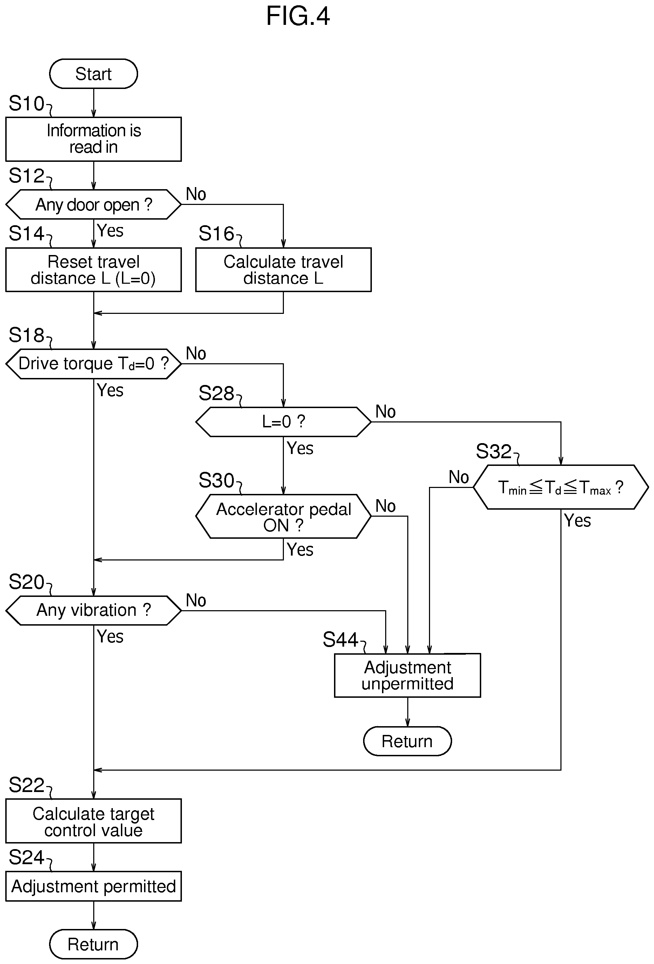

FIG. 4 is a schematic flowchart for illustrating the controlling processes of the optical axis controller 1. The control shown in the flowchart starts when the ignition switch 21 of the vehicle 10 is set at the accessory position or at the ON-position to drive the optical axis controller 1, and the process is reiterated at a predetermined cycle (for example, several tens of [ms] cycle) . In the present embodiment, the value of the travel distance L accumulated in the optical axis controller 1 is initially zero, and the travel distance L in the travel distance calculator 2e is reset at the start of the flow.

At step S10, the information is read in, which is transmitted from the various sensors connected to the input terminal of the optical axis controller 1. The information input to the optical axis controller 1 is, for example, open/close signals P from the door sensor 12, information on the wheel speed $V_t$ from the wheel speed sensor 14, information on the vehicle height H from the height sensor 13, the engine torque $T_e$ from the engine controller 8, information on the engine speed $N_e$ from the engine speed sensor 16, and other parameters. Note that both of the engine torque $T_e$ and the engine speed $N_e$ are zero before the engine 7 starts.

At step S12, the optical axis controller 1 determines whether any of doors 17 of the vehicle 10 is opened or not, on the basis of the open/close signals P from the door sensor 12. If any of the doors 17 is opened, the process goes to step S14 and the travel distance L is reset to zero. If all doors 17 are closed, the process goes to Step S16 and the travel distance L is calculated on the basis of the wheel speed $V_t$.

The travel distance L is a cumulative value calculated from, for example, the following Equation 2 on the basis of the last value L' of the travel distance which is obtained from the last (previous) calculation cycle. Note that number "k" in Equation 2 is a coefficient, and $k \cdot V_t$ corresponds to the travel distance of the vehicle 10 from the point of the last calculation cycle. Thus, during the stop mode of the vehicle 10, the value of the travel distance L does not vary.

$$(\text{travel distance } L)=(\text{last value } L')+k\cdot V_t \ \text{......(Eq.2)}$$

[3-2. Control under no drive torque]

At step S18, the optical axis controller 1 determines whether the drive torque $T_d$ is generated ($T_d\neq0$) or not ($T_d=0$). At this step, for example, the state of the engine torque $T_e$ is determined. If the engine torque $T_e$ of the engine 7 is zero, the optical axis controller 1 determines that the drive torque $T_d$ is not generated. Then the process goes to step S20. If the engine 7 operates (when idling or running), $T_e$ is not zero. The optical axis controller 1 determines that the drive torque $T_d$ is generated. Then the process goes to step S28. It should be noted that the existence of the drive torque $T_d$ can be determined using the engine speed $N_e$ instead of the engine torque $T_e$. In addition, the threshold for determination of the engine torque $T_e$ can be set to any constant number other than zero, in view of the calculation error or a margin for the control.

At step S20, the vibration of the vehicle is determined on the basis of the variation of the vehicle height H. For example, if the wave amplitude (or frequency) of the vehicle height H with time is equal to or larger than a predetermined value, the vehicle is determined to be vibrating, then the process goes to step S44. If the vehicle is not determined to be vibrating, the posture of the vehicle is considered to be stable, then the process goes to step S22.

At step S22, the pitch angle $\theta_p$ of the vehicle 10 is estimated on the basis of the vehicle height H. The target control value of the actuator 6 is then calculated in accordance with the pitch angle $\theta_p$. At step S24, the drive signals in accordance with the target control value is transmitted to the actuator 6, then the optic angle of the headlamp 5 is automatically adjusted.

[3-3. Control under applied drive torque (stop mode of vehicle)]

If the drive torque $T_d$ is determined to be generated at step S18, the process goes to step S28, then the travel distance L of the vehicle 10 is checked for. Note that the travel distance L of the vehicle 10 is determined to be zero only before the vehicle 10 starts, for example, just after the engine 7 starts or when any of doors 17 is opened. Thus, if travel distance L is zero, the vehicle 10 is determined to be still stopping, then the process goes to step S30. If the travel distance L of the vehicle 10 is not zero, the vehicle 10 is determined to be running, then the process goes to step S32. It should be noted that at step S28, the travel distance L can be determined using any constant number other than zero as the determination threshold.

At step S30, the optical axis controller 1 determines whether the driver is stepping on the accelerator pedal or not, on the basis of the information on the accelerator pedal operation amount $\theta_{AC}$ detected by the accelerator pedal sensor 15. For example, if the amount $\theta_{AC}$ of the accelerator pedal operation is zero, the process goes to step S20, while if the amount $\theta_{AC}$ of the accelerator pedal operation is not zero, the process goes to step S44. Note that the amount $\theta_{AC}$ of the accelerator pedal operation can be determined using any constant number other than zero as the determination threshold, as in the travel distance L.

As can be seen from steps S28-S30, the process goes to step S44 when the stepping operation on the accelerator pedal is detected even if the vehicle 10 is not running. At step S44, the optical axis is not controlled, i.e., the actuator 6 is not driven and the adjustment of the optic angle is not permitted. Thus, during the stop mode of the vehicle 10, the optical axis is controlled only when the vehicle keeps its stable posture.

[3-4. Control under applied drive torque (running mode of vehicle)]

If the vehicle 10 is determined to be running at step S28, the process goes to step S32, then the value of the drive torque $T_d$ is determined. At that time, the change gear ratio calculator 2a calculates the change gear ratio R from the engine speed $N_e$ and the wheel speed $V_t$. The drive torque calculator 2b calculates the drive torque $T_d$ by multiplying the change gear ratio R by the engine torque $T_e$. In addition, the determiner 3 determines whether the drive torque $T_d$ is within the range from $T_{min}$ to $T_{max}$ (within first range).

If the drive torque is $T_{min}{\leqq}T_d{\leqq}T_{max}$, the vehicle 10 is determined to be in the static running state, then the process goes to step S22. Namely, the vehicle 10 is determined to be running with keeping its stopping posture in the pitch direction, and then the optical axis is controlled. If the drive torque is not $T_{min}{\leqq}T_d{\leqq}T_{max}$, the vehicle 10 is determined to be in the dynamic running state, then the process goes to step S44. In this case, the vehicle 10 is determined to be in a relatively unstable state in which the posture of the vehicle 10 dynamically changes or may dynamically change, and then the control of the optical axis is banned.

[4. Advantageous Effects]

In the optical axis controller 1 of the automotive headlamp described above, before the determination of the condition for starting the control of the optical axis, the running state of the vehicle 10 is determined to be divided a static running state or a dynamic running state. The posture, stable or not, of the vehicle 10 in the pitch direction is determined using these static running state and dynamic running state as criteria. In addition, the value of the drive torque $T_d$ applied to the drive wheels 11 is used for the determination of the posture in the pitch direction. Thus, use of the drive torque $T_d$ of the drive wheels 11 as a determination condition for permitting or not permitting the adjustment of the optic angle results in the accurate determination of the suitable running state of the vehicle 10 for correcting the optical axis.

For example, the method of determining the running state using the engine speed $N_e$ is difficult to determine a constant high-speed running state (auto cruse), which is one of the static running state, while the method in accordance with the present embodiment can accurately determine the constant high-speed running state, which results in further accurate determination of the running states. Referring to the value of the drive torque $T_d$ enables determination of the low-speed running states, for example, on a climbing road or on a descending road, in which the posture in the pitch direction may be changed.

Thus, the determination accuracy of the running states for correcting the optical axis can be improved without overload of the actuator 6. The convenience for controlling the optical axis can be enhanced without increasing product costs of the headlamp 5. Also, the lifetime of the components in connection with the adjustment of the optic angle, such as the actuator 6 can be expanded, which improves the balance between costs and convenience, resulting in high cost-effectiveness.

In addition, in the optical axis controller 1 of the automotive headlamp as described above, the running state of the vehicle 10 is determined to be static when the value of the drive torque $T_d$ is $T_{min} \leqq T_d T \leqq_{max}$. In other words, limiting the value of the drive torque $T_d$ for determining the static running state to the predetermined range (within first range) takes the effects applied to the posture of the vehicle 10 in the pitch direction into account, without the information on the vehicle speed and the slope of the road surface and any other parameters, which can enhance the determination accuracy of the running states.

Furthermore, the postural change caused by the acceleration and deceleration of the vehicle 10 and the postural change caused by the slope of the road surface can be determined by one logic, resulting in the simplification of the calculation configuration, which allows the enhancement of control reliability.

In addition, in the optical axis controller 1 of the automotive headlamp, the drive torque calculator 2b calculates the drive torque $T_d$ on the basis of the engine torque $T_e$ and the change gear ratio R. In this way, the highly accurate value of the drive torque $T_d$ applied to drive wheels can be obtained by the calculation based on the engine torque $T_e$ and the change gear ratio R. The determination accuracy of the running state, therefore, can be enhanced, when the vehicle 10 runs with the driving force of the engine 7 (for example, gasoline-powered vehicle).

[II. Second Embodiment]

[1. Control Block Configuration]

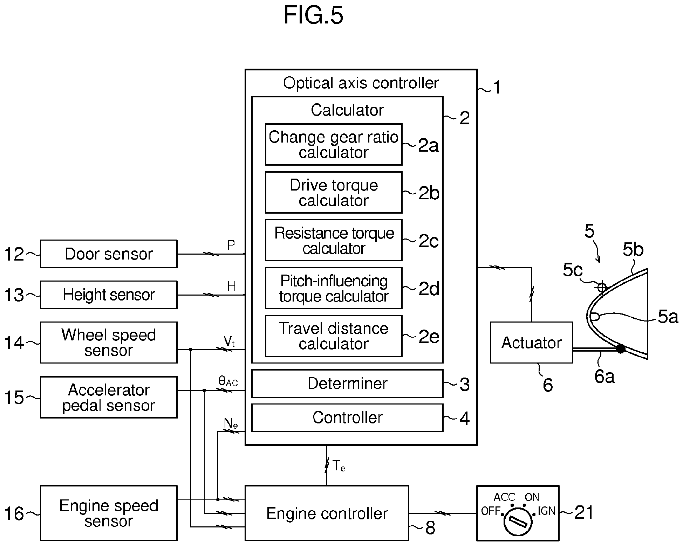

As shown in FIG. 5, the optical axis controller of the automotive headlamp in accordance with the second embodiment includes the calculator 2 having a different configuration from the first embodiment. In this section, like reference characters designates the same components as the first embodiment and the explanation will be omitted

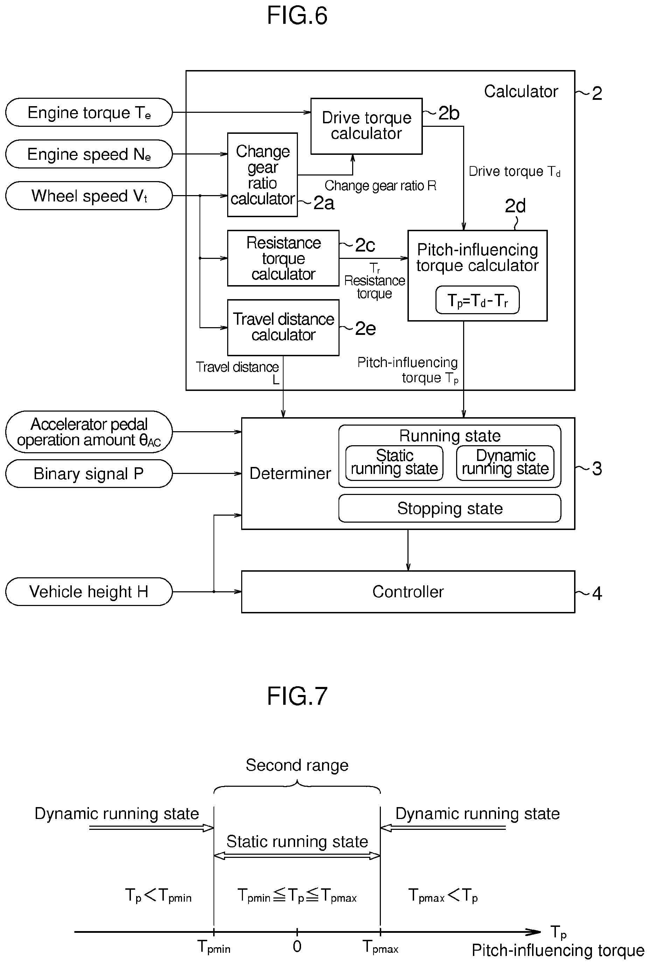

The calculator 2 performs calculations relating to the above described control of the optical axis, which calculator 2 includes the change gear ratio calculator 2a, the drive torque calculator 2b, a resistance torque calculator 2c, a pitch-influencing torque calculator 2d, and the travel distance calculator 2e. Note that FIG. 6 schematically shows the flow of parameters calculated by each component.

The resistance torque calculator 2c calculates the resistance torque $T_r$ when the vehicle 10 is running (during the running mode of the vehicle 10). The resistance torque $T_r$ means the decreased amount of the torque which varies according to the running speed of the vehicle 10. The resistance torque $T_r$ correlates with a torque that is attempting to move the vehicle 10 in the reverse direction of the drive torque $T_d$ by the air resistance and the friction resistance of the wheels 11 or other resistance. The resistance torque calculator 2c calculates the resistance torque $T_r$ on the basis of the wheel speed $V_t$. For example, the value of the resistance torque $T_r$ is calculated on the basis of the calculation model in which the resistance increases as the square of the wheel speed $V_t$ increases. The value of the resistance torque $T_r$ calculated by the resistance torque calculator 2c is transmitted to the pitch-influencing torque calculator 2d.

The pitch-influencing torque calculator 2d calculates the pitch-influencing torque $T_p$ which influences the pitch angle $\theta_p$ of the vehicle 10 (posture of vehicle 10 in pitch direction). The pitch-influencing torque $T_p$ is obtained by subtracting the resistance torque $T_r$ from the drive torque $T_d$ in accordance with Equation 3 described below. The value of the pitch-influencing torque $T_p$ calculated by the pitch-influencing torque calculator 2d is transmitted to the determiner 3.

$$\text{(pitch-influencing torque } T_p)$$
$$= \text{(drive torque } T_d) - \text{(resistance torque } T_r) \quad \text{...... (Eq.3)}$$

Note that the pitch angle $\theta_p$ of the vehicle 10 is a parameter depending on a rate of acceleration applied to the vehicle 10 in an anteroposterior direction. For example, if the rate of acceleration of the vehicle 10 coasting on the descending road is the same as the rate of acceleration in the anteroposterior direction of the vehicle accelerating, the pitch angle $\theta_p$ of the vehicle 10 is not different therebetween. The rate of acceleration in the anteroposterior direction depends on the amount of the pitch-influencing torque $T_p$, which is obtained by subtracting the resistance torque $T_r$ from the drive torque $T_d$. Thus, referring to the pitch-influencing torque $T_p$ enables accurate estimation of the pitch angle $\theta_p$ regardless of the running state of the vehicle 10 or the slope of the road surface, namely it enables accurate estimation of the posture of the vehicle 10.

The determiner 3 determines whether the running state of the vehicle 10 is static or dynamic on the basis of the pitch-influencing torque $T_p$ calculated by the pitch-influencing torque calculator 2d. In other words, the determiner 3 determines that the running state of the vehicle 10 is the above described state (2) or state (3) on the basis of the pitch-influencing torque $T_p$. The determiner 3 previously stores a map or an arithmetic expression, which defines the correspondence relation between the value of the pitch-influencing torque $T_p$ and the state of the vehicle 10, and determines the state of the vehicle 10 using the map or the arithmetic expression.

For example, as shown in FIG. 7, if the pitch-influencing torque $T_p$ is greater than a predetermined positive value $T_{pmax}$ or smaller than a predetermined negative value $T_{pmin}$, the running state of the vehicle 10 is determined to be dynamic, while if the pitch-influencing torque $T_p$ is within a range from $T_{pmin}$ to $T_{pmax}$ (within second range), the running state of the vehicle 10 is determined to be static. Note that the positive torque corresponds to the forward driving force of the vehicle 10, while the negative torque corresponds to the backward driving force of the vehicle 10. The running state of the vehicle 10 determined here is transmitted to the controller 4.

[2. Flowchart]

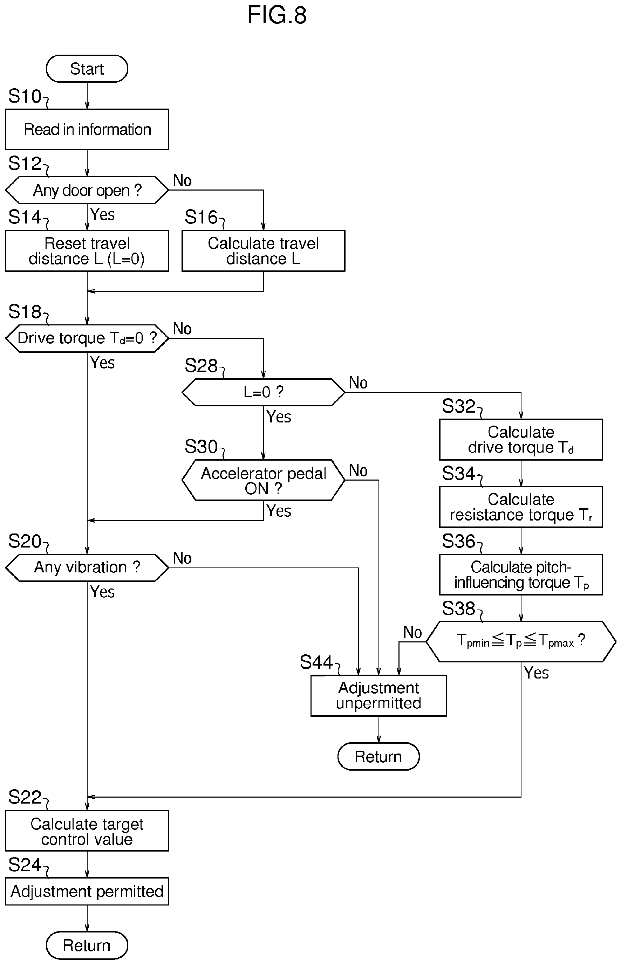

A flowchart shown in FIG. 8 further includes steps S34, S36, and S38 in addition to the flowchart shown in FIG. 4. Following to step S32, the value of the resistance torque $T_r$ is calculated at step S34. The resistance torque calculator 2c calculates the resistance torque $T_r$ on the basis of the wheel speed $V_t$. In step S36 subsequent to S34, the pitch-influencing torque calculator 2d calculates the pitch-influencing torque $T_p$, which is a value obtained by subtracting the resistance torque $T_r$ from the drive torque $T_d$.

At step S38, the determiner 3 determines whether the pitch-influencing torque $T_p$ is within the range from $T_{pmin}$ to $T_{pmax}$ (within second range). If the pitch-influencing torque $T_p$ is $T_{pmin} \leqq T_p \leqq T_{pmax}$, the vehicle 10 is determined to be in the static running state, then the process goes to step S22. That is, the vehicle 10 is determined to be in stable state and running with keeping its stopping posture in the pitch direction, and then the optical axis is controlled. If the pitch-influencing torque $T_p$ is not $T_{pmin} \leqq T_p \leqq T_{pmax}$, the vehicle 10 is determined to be in the dynamic running state, then the process goes to step S44. In this case, the vehicle 10 is determined to be in a relatively unstable state in which the posture of the vehicle 10 dynamically changes or may dynamically change, and then the control of the optical axis is not permitted.

[3. Advantageous Effects]

In the optical axis controller 1 of the automotive headlamp described above, the running state of the vehicle 10 is determined to be a static state or a dynamic state, before the determination of the condition for starting the control of the optical axis. The posture, stable or not, of the vehicle 10 in the pitch direction is determined using the static running and dynamic running states as criteria. In addition, the value of the drive torque $T_d$ applied to the drive wheels 11 and the value of the resistance torque $T_r$ are used for the determination of the posture in the pitch direction. Thus, use of the drive torque $T_d$ and the resistance torque $T_r$ of the drive wheels 11 as a determination condition for permitting or not permitting the adjustment of the optic angle results in the accurate determination of the running state of the vehicle 10 suitable for correcting the optical axis.

In addition, referring to the value of the drive torque $T_d$ and the value of the resistance torque $T_r$ which is a decrement of the torque depending on the running speed of the vehicle 10, can accurately estimate the posture of the vehicle 10 regardless of the running state of the vehicle 10 or the slope of the road surface. It can also determinate the low-speed running states, for example, on a climbing road or on a descending road, in which the posture in the pitch direction may vary.

Thus, the determination accuracy of the running states for correcting the optical axis can be improved without overload of the actuator 6. The convenience for controlling the optical axis can be enhanced without increasing costs of the headlamp 5. Also, the lifetime of the components in connection with the adjustment of the optic angle, such as the actuator 6 can be expanded, which improves the balance between costs and convenience, resulting in high cost-effectiveness.

In the optical axis controller 1 of the automotive headlamp, the pitch-influencing torque $T_p$ is obtained by subtracting the resistance torque $T_r$ from the drive torque $T_d$. If the value of the pitch-influencing torque $T_p$ is $T_{pmin} \leqq T_p \leqq T_{pmax}$, the running state of the vehicle 10 is determined to be static. In other words, limiting the value of the pitch-influencing torque $T_p$ for determining the static running state to the predetermined range takes the effects applied to the posture of the vehicle 10 in the pitch direction into account, without the information on the vehicle speed and the slope of the road surface or other parameters, which can enhance the determination accuracy of the running states.

Furthermore, the value of the pitch-influencing torque $T_p$ always corresponds to the pitch angle $\theta_p$ regardless of the running state of the vehicle 10 or the slope of the road surface, which can dramatically improve the determination accuracy of the running state of the vehicle 10. In addition, the postural change caused by the acceleration and deceleration of the vehicle 10 and the postural change caused by the slope of the road surface can be accurately determined by one logic, resulting in the simplification of the calculation configuration, which enhances the reliability of control.

In the calculation of the pitch-influencing torque $T_p$, the resistance torque $T_r$ is calculated on the basis of the wheel speed $V_t$, which can determinate the posture of the vehicle 10, for example, in view of the air resistance, during the high speed running mode of the vehicle 10 such as constant high-speed running (auto cruse), and the accurate calculation of the value of the pitch-influencing torque, resulting in the enhancement of the control of the optical axis during the running mode.

[III. Third embodiment]

An optical axis controller is known, which can adjust the optic angle not only during the stop mode but also during other running modes. Unfortunately, its conventional control logic sometimes fails to determine the accurate posture of the vehicle during the turning motion of the vehicle. For example, while a vehicle is running on a ramp way to an expressway (helical ramp way connecting two roads having difference in height) at constant speed, a posture of the vehicle in a crosswise direction is sometimes unstable even the posture of the vehicle in the anteroposterior direction is stable. Thus, in order to control the optical axis in an appropriate manner, it is desirable to accurately determine not only the posture of the vehicle in the pitch direction but also the posture of the vehicle in a roll direction.

Accordingly, an optical axis controller in accordance with a third embodiment includes a configuration to solve such a problem.

[1. Apparatus Configuration]

The optical axis controller of the automotive headlamp in accordance with the third embodiment is accomplished by adding the step of determining a roll angle $\theta_y$ of the vehicle 10 to the optical axis controller in accordance with the first embodiment or the second embodiment. This section describes the step of determining the roll angle $\theta_y$ in the optical axis controller of the third embodiment.

[2. Control Block Configuration]

In the present embodiment, "a running state while vehicle 10 running with substantially keeping its stopping posture in the pitch direction and in the roll direction" is referred to "the static running state". In other words, the optic angle is adjusted in relatively stable running states in which the posture in the pitch direction and in the roll direction on the road surface is substantially the same as its stopping posture, and the posture is kept without a dynamic change for a certain time.

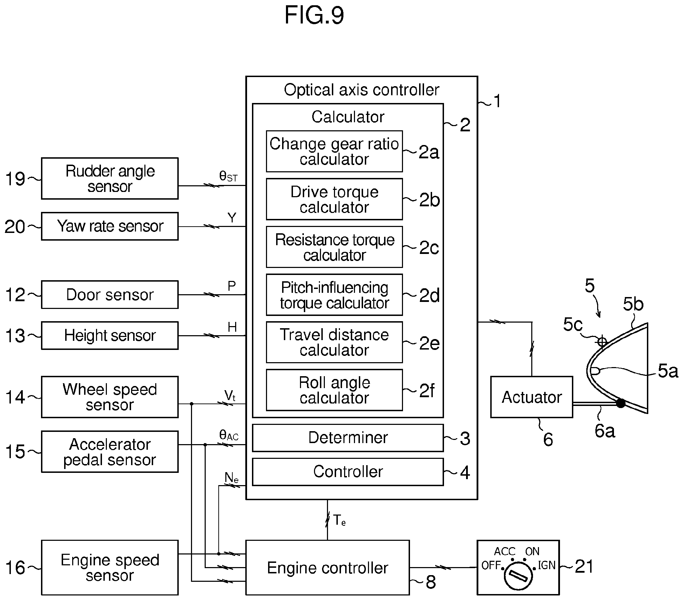

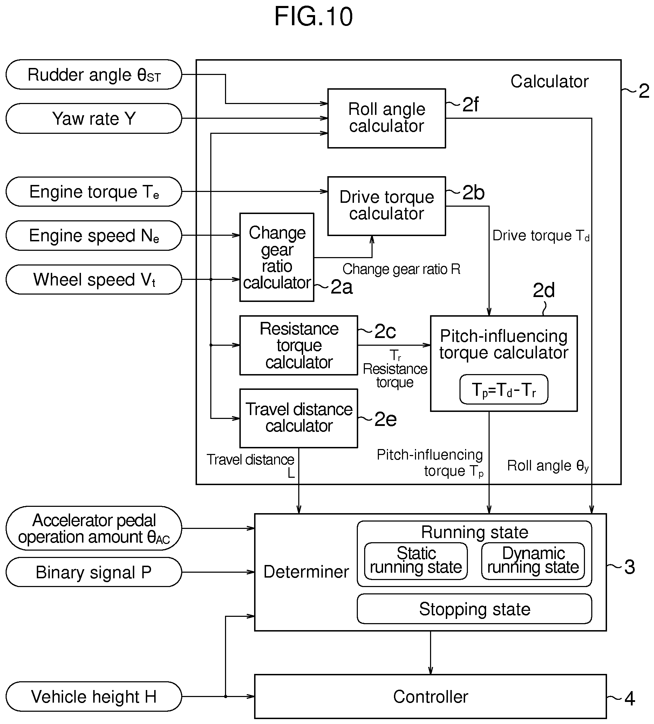

As shown in FIG. 9, the calculator 2 of the optical axis controller 1 includes a change gear ratio calculator 2a, a drive torque calculator 2b, a resistance torque calculator 2c, a pitch-influencing torque calculator 2d, a travel distance calculator 2e, and a roll angle calculator 2f. The optical axis controller 1 in accordance with the third embodiment is made by adding the roll angle calculator 2f to the optical axis controller 1 in accordance with the second embodiment. In addition, the optical axis controller 1 of the third embodiment is connected to a rudder angle sensor 19 and a yaw rate sensor 20. It should be noted that FIG. 10 schematically shows the flow of parameters calculated by each component.

The roll angle calculator 2f calculates the roll angle $\theta_y$ of the vehicle 10 (the posture of the vehicle 10 in the roll direction) . The roll angle $\theta_y$ is a parameter depending on a rate of lateral acceleration $G_y$ (rate of acceleration in the crosswise direction) applied to the vehicle 10. Provided the weight of the vehicle 10 is fixed, the roll angle $\theta_y$ can be represented by a function of the rate of lateral acceleration $G_y$. The rate of lateral acceleration $G_y$ applied to the vehicle 10 increases as the turning radius, the running speed of the vehicle, and the yaw rate increase. Utilizing such characteristics, the roll angle calculator 2f calculates the roll angle $\theta_y$ on the basis of the rudder angle $\theta_{ST}$ detected by the rudder angle sensor 19, the yaw rate Y detected by the yaw rate sensor 20, the wheel speed $V_t$ and other parameters. The information on the roll angle $\theta_y$ calculated by the roll angle calculator 2f is transmitted to the determiner 3.

The rate of lateral acceleration $G_y$ can be determined by any arithmetic expression. In the case of representing the rate of lateral acceleration $G_y$ [m/s²] using the rudder angle $\theta_{ST}$ [rad], the wheel speed $V_t$ [m/s], the turning radius Z[m], and the yaw rate Y [rad/s], the following Equations 4-6 can be used.

$$\text{(rate of lateral acceleration } G_y)$$
$$= \text{(wheel speed } V_t) \times \text{(yaw rate Y)} \quad \ldots\ldots \text{ (Eq.4)}$$

$$\text{(yaw rate Y)}$$
$$= \text{(wheel speed } V_t) / \text{(turning radius Z)} \quad \ldots\ldots \text{ (Eq.5)}$$

$$\text{(turning radius Z)}$$
$$= \{ (C_a) - (C_b) \times \text{(wheel speed } V_t)^2 \} / \text{(rudder angle } \theta_{ST}) \quad \ldots\ldots \text{ (Eq.6)}$$

$(C_a, C_b$: constant number)

Accordingly, the rate of lateral acceleration $G_y$ can be determined from Equation 4, using the wheel speed $V_t$ and the yaw rate Y detected by the yaw rate sensor 20. The rate of lateral acceleration $G_y$ can also be determined from Equation 4, using the yaw rate Y obtained from Equation 5 and Equation 6, using the wheel speed $V_t$ and the rudder angle $\theta_{ST}$. Alternatively, according to Equations 4 to 6, the rate of lateral acceleration $G_y$ depends on the wheel speed $V_t$ and the rudder angle $\theta_{ST}$, while the roll angle $\theta_y$ depends on the rate of lateral acceleration $G_y$, so that the relation among the roll angle $\theta_y$, the wheel speed $V_t$ and rudder angle $\theta_{ST}$ can be previously mapped or mathematized to be stored in the roll angle calculator 2f.

The determiner 3 determines whether the running state of the vehicle 10 is static or dynamic on the basis of the pitch-influencing torque $T_p$ calculated by the pitch-influencing torque calculator 2d and the roll angle $\theta_y$ calculated by the roll angle calculator 2f. In other words, the determiner 3 determines whether the running state of the vehicle 10 is the state (2) or (3) above described. The determiner 3 previously stores the map or the arithmetic expression, which defines the correspondence relation between the value of the pitch-influencing torque $T_p$ and the state of the vehicle 10, and determines the state of the vehicle 10 using the map or the arithmetic expression.

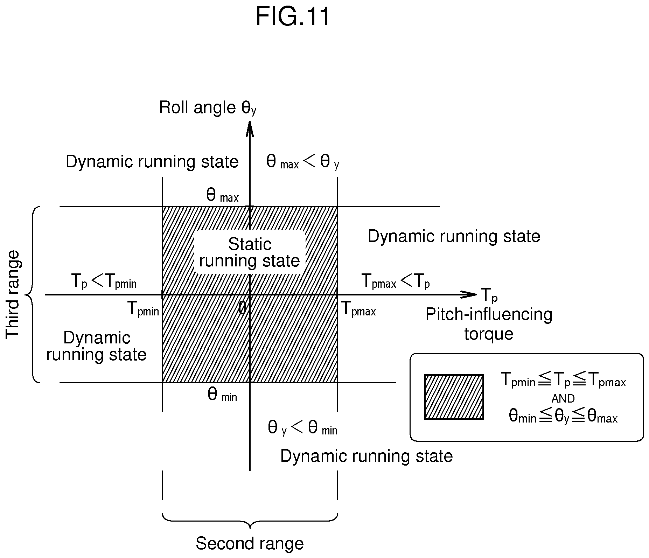

For example, as shown in FIG. 11, if the pitch-influencing torque $T_p$ is greater than the predetermined positive value $T_{pmax}$ or smaller than the predetermined negative value $T_{pmin}$, the running state of the vehicle 10 is determined to be dynamic. Similarly, if the roll angle $\theta_y$ is greater than a predetermined positive angle $\theta_{max}$ or smaller than a predetermined negative angle $\theta_{min}$, the running state of the vehicle 10 is determined to be dynamic.

On the contrary, if the pitch-influencing torque $T_p$ is within the range from $T_{pmin}$ to $T_{pmax}$ (within second range) and the roll angle $\theta_y$ is within the range from $\theta_{min}$ to $\theta_{max}$ (within third range), running state of the vehicle 10 is determined to be static. In FIG. 11, an area where the vehicle 10 is determined to be in the static running state is shown by hatched lines. Note that the positive torque corresponds to the forward driving force of the vehicle 10, while the negative torque corresponds to the backward driving force of the vehicle 10. The running state of the vehicle 10 determined by the determiner 3 is transmitted to the controller 4.

[3. Flowchart]

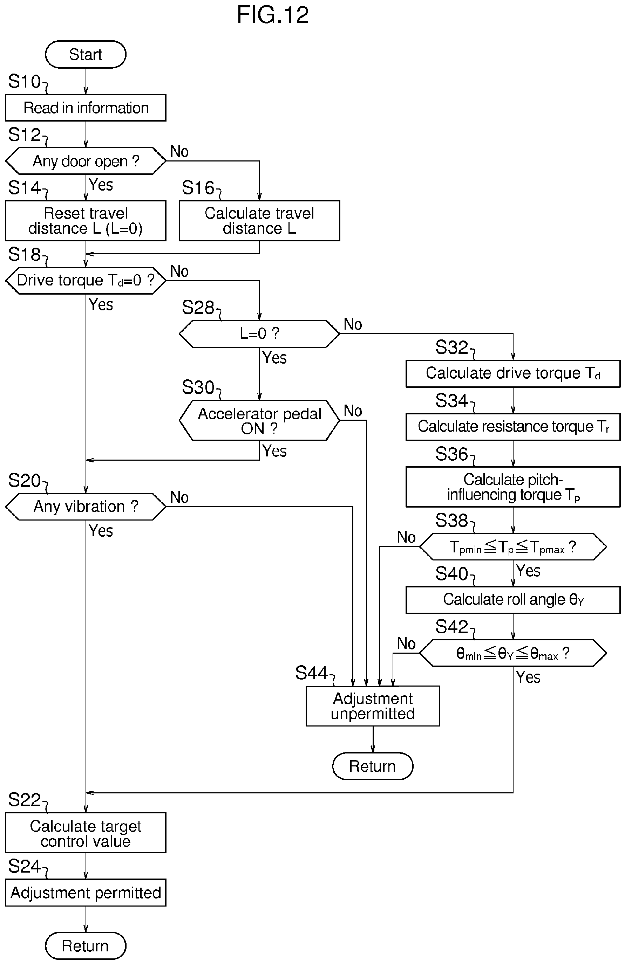

A flowchart shown in FIG. 12 further includes steps S40 and S42 in addition to the flowchart in FIG. 8. At step S40, the roll angle calculator 2f calculates the value of the roll angle $\theta_y$. The roll angle $\theta_y$ is calculated on the basis of the rudder angle $\theta_{ST}$, the wheel speed $V_t$, and the yaw rate Y, and then transmitted to the determiner 3. At the following step S42, the roll angle $\theta_y$ is determined, by the determiner 3, to be within the range from $\theta_{min}$ to $\theta_{max}$ or not. If the roll angle $\theta_y$ is $\theta_{min} \leqq \theta_y \leqq \theta_{max}$, the vehicle 10 is determined to be in the static running state, then the process goes to step S22. Namely, the vehicle 10 is determined to be stably running with keeping its stopping posture in the pitch direction and in the roll direction, and the optical axis is then controlled.

If the roll angle $\theta_y$ is not $\theta_{min} \leqq \theta_y \leqq \theta_{max}$, the vehicle 10 is determined to be in the dynamic running state, then the process goes to step S44. In this case, the vehicle 10 is determined to be in a relatively unstable running state in which the posture of the vehicle 10 in the roll direction dynamically changes or may dynamically change, and the control of the optical axis is not permitted.

[4. Advantageous Effects]

In the optical axis controller 1 of the automotive headlamp described above, before the determination of the condition for starting the control of the optical axis, the running state of the vehicle 10 is determined to be static or dynamic. The posture, stable or not, of the vehicle 10 in the pitch direction and in the roll direction is determined using these static running state and dynamic running state as criteria. In addition, the value of the drive torque $T_d$ applied to the drive wheels and the value of the resistance torque $T_r$ are used for the determination of the posture in the pitch direction, while the value of the roll angle $\theta_y$ is used for the determination of the posture in the roll direction.

Thus, use of the drive torque $T_d$ of the drive wheels, the resistance torque $T_r$, and the roll angle $\theta_y$ as a determination condition for permitting or not permitting the adjustment of the optic angle results in the accurate determination of the running state of the vehicle 10 suitable for correcting the optical axis.

Along with the method of the second embodiment, the method of the present embodiment refers to the roll angle $\theta_y$, which can accurately estimate the postural change in the roll direction which may increase while the vehicle is running, for example, on the ramp way to the expressway at constant speed.

Thus, the determination accuracy of the running states for correcting the optical axis can be improved without overload of the actuator 6. The convenience for controlling the optical axis can be enhanced without increasing costs of the headlamp 5. Also, the lifetime of the components in connection with the adjustment of the optic angle, such as the actuator 6 can be expanded, which improves the balance between costs and convenience, resulting in high cost-effectiveness.

In the optical axis controller 1 of the automotive headlamp described above, if the value of the roll angle $\theta_y$ is $\theta_{min} \leqq \theta_y \leqq \theta_{max}$, the running state of the vehicle 10 is determined to be static. In other words, limiting the value of the roll angle $\theta_y$ for determining the static running state to the predetermined range takes effects applied to the posture of the vehicle 10 in the roll direction into account, without a device which detects the roll angle and a device which detects the rate of acceleration (for example, gravitational acceleration, anteroposterior acceleration, and lateral acceleration) or other devices, which can enhance the determination accuracy of the running states.

In addition, in the optical axis controller 1 of the automotive headlamp, the roll angle $\theta_y$ is calculated on the basis of the rudder angle $\theta_{ST}$, the wheel speed $V_t$, and the yaw rate Y, which leads to a simple configuration for accurately calculating the roll angle $\theta_y$, resulting in high determination accuracy of the running state of the vehicle 10.

[5. Alternatives]

In the above-described first to third embodiments, the optical axis controller 1 is described which is applied to the gasoline-powered vehicle including the engine 7. The optical axis controller 1 can also be applied to an electric automotive vehicle having a traction motor (such as electric motor, and electric motor-generator) or a hybrid automotive vehicle having a traction motor and an engine 7. In an electric automotive vehicle provided with the above-described optical axis controller 1, the drive torque $T_d$ of the vehicle 10 can be calculated on the basis of the value of a motor torque $T_m$ provided from the traction motor.

For example, the drive torque calculator 2b calculates the rotation ratio (change gear ratio Rm) of the traction motor to the drive wheels, then the drive torque $T_d$ can be obtained by the multiplying the motor torque $T_m$ by the rotation ratio. The drive torque calculator 2b can receive the information of the motor torque $T_m$ from an electronic controller which controls the traction motor, or can calculate the motor torque $T_m$ on the basis of the information of the amount of the accelerator pedal operation $\theta_{AC}$ detected by the accelerator pedal sensor 15, the pushing amount of a brake pedal, and the wheel speed $V_t$. It should be noted that some electric automotive vehicles having traction motors do not include a transmission between the traction motor and the drive wheels, in this case the rotation ratio (change gear ratio Rm) can be "1 (Rm=1)" or the motor torque $T_m$ can be used as the drive torque $T_d$ for the calculation.

In this way, the accurate value of the drive torque $T_d$ applied to the drive wheels can be obtained by the calculation based on the motor torque $T_m$ (or the calculation based on the motor torque $T_m$ and the rotation ratio) . Thus, in the vehicle having the traction motor, the determination accuracy of the running state also can be enhanced.

In the case of a hybrid automotive vehicle, the drive torque calculator 2b can calculate the drive torque $T_d$ by adding a torque provided from the engine and a torque provided from the traction motor.

In the above described first embodiment, although $T_{max}$ with a positive value and $T_{min}$ with a negative value are illustrated as the determination thresholds of the static running state, $T_{max}$ and $T_{min}$ can have any values.

In the first embodiment, a running state under the drive torque $T_d$ which is zero is considered to be the most stable so that the range of the drive torque $T_d$ in the static running state (or first range) preferably includes zero or a small value close to zero.

In the second embodiment, a running state under the pitch-influencing torque $T_p$ which is zero is considered to be the most stable so that the range of the pitch-influencing torque $T_p$ in the static running state (or second range) preferably includes zero or a small value close to zero.

Similarly in the third embodiment, the range of the roll angle $\theta_y$ in the static running state (or third range) preferably includes zero or a value close to zero.

In the third embodiment, as shown in FIG. 11, although the running state is determined to be static when the pitch-influencing torque $T_p$ is within the second range and the roll angle $\theta_y$ is within the third range, any conditions can be used for the determination of the static running state. For example, the running state can be determined to be static regardless of the value of the pitch-influencing torque $T_p$ when the roll angle $\theta_y$ is within the third range. Alternatively, the running state can be determined to be static when the roll angle $\theta_y$ is within the third range and the drive torque $T_d$ is within the first range.

REFERENCE SIGNS LIST

| | |
|---|---|
| 1 | optical axis controller |
| 2 | calculator |
| 2a | change gear ratio calculator |
| 2b | drive torque calculator |
| 2c | resistance torque calculator |
| 2d | pitch-influencing torque calculator |
| 2e | travel distance calculator |
| 2f | roll angle calculator |
| 3 | determiner |
| 4 | controller |
| 5 | headlamp |
| 6 | actuator (adjuster) |

The invention thus described, it will be obvious that the same may be varied in many ways. Such variations are not to be regarded as a departure from the scope of the invention, and all such modifications as would be obvious to one skilled in the art are intended to be included within the scope of the following claims.

**Claims**

1. An optical axis controller of an automotive headlamp having an adjuster (6) which adjusts an optical angle of the automotive headlamp (5), **characterized by** comprising:

a **drive torque calculator (2b)** which calculates a drive torque ($T_d$) applied to drive wheels of a vehicle (10),
a **determiner (3)** which determines whether the vehicle (10) is in a static running state or in a dynamic running state on the basis of the drive torque ($T_d$),
a **controller (4)** which permits the adjuster (6) to adjust the optical angle if the determiner (3) determines that the vehicle (10) is in the static running state, and does not permit the adjuster (6) to adjust the optical angle if the determiner (3) determines that the vehicle (10) is in the dynamic running state,
a **resistance torque calculator (2c)** which calculates a resistance torque ($T_r$) when the vehicle is running on a basis of a wheel speed ($V_t$) of the vehicle (10), the resistance torque ($T_r$) increasing as the square value of the wheel speed ($V_t$),
a **pitch-influencing torque calculator (2d)** which calculates a pitch-influencing torque ($T_p$) obtained by sub-tracting the resistance torque ($T_r$) from the drive torque ($T_d$), and
a **roll angle calculator (2f)** which calculates a roll angle ($\theta_y$) when the vehicle (10) is running,

wherein **the static running state** is a state of the vehicle (10) running while keeping its stopping posture in a pitch direction and **the dynamic running state** is running states other than the static running state,
wherein **the determiner (3)** determines that the vehicle (10) is in the static running state if a value of the pitch-influencing torque ($T_p$) is within a second range and the roll angle ($\theta_y$) is within a third range, otherwise the determiner (3) determines that the vehicle (10) is in the dynamic running state, and
wherein zero is included within the second range, and
wherein zero is also included within the third range.

2. The optical axis controller of the automotive headlamp according to claim 1,

wherein **the drive torque calculator (2b)** calculates the drive torque (Td) on the basis of a change gear ratio (R) of an engine to the drive wheels and an engine torque (Te) provided from the engine.

3. The optical axis controller of the automotive headlamp according to any one of claims 1 through 2, wherein **the drive torque calculator (2b)** calculates the drive torque (Td) on the basis of a motor torque (Tm) provided from a traction motor.

4. The optical axis controller of the automotive headlamp according to claim 3, wherein **the drive torque calculator (2b)** calculates the drive torque ($T_d$) on the basis of the motor torque ($T_m$) and a change gear ratio (Rm) of the traction motor to the drive wheels.

5. The optical axis controller of the automotive headlamp according to any one of claims 1 through 4, wherein **the controller (4)** also permits the adjuster (6) to adjust the optical angle when the vehicle (10) is at a stop.

**Patentansprüche**

1. Steuerung der optischen Achse eines Kraftfahrzeugscheinwerfers, der einen Einsteller (6) aufweist, welcher einen optischen Winkel des Kraftfahrzeugscheinwerfers (5) einstellt, **dadurch gekennzeichnet, dass** sie umfasst:

    einen Antriebsmoment-Rechner (2b), der ein Antriebsmoment ($T_d$) berechnet, welches auf Antriebsräder eines Fahrzeugs (10) aufgebracht wird,
    einen Bestimmer (3), der auf der Basis des Antriebsmoments ($T_d$) bestimmt, ob sich das Fahrzeug (10) in einem statischen Fahrzustand oder in einem dynamischen Fahrzustand befindet,
    eine Steuerung (4), die es dem Einsteller (6) ermöglicht, den optischen Winkel einzustellen, wenn der Bestimmer (3) bestimmt, dass sich das Fahrzeug (10) im statischen Fahrzustand befindet, und es dem Einsteller (6) nicht ermöglicht, den optischen Winkel einzustellen, wenn der Bestimmer (3) bestimmt, dass sich das Fahrzeug (10) im dynamischen Fahrzustand befindet,
    einen Widerstandsmoment-Rechner (2c), der ein Widerstandsmoment ($T_r$), wenn das Fahrzeug fährt, auf einer Basis einer Radgeschwindigkeit ($V_t$) des Fahrzeugs (10) berechnet, wobei das Widerstandsmoment ($T_r$) als der Quadratwert der Radgeschwindigkeit ($V_t$) zunimmt,
    einen Steigungseinflussmoment-Rechner (2d), der ein Steigungseinflussmoment ($T_p$) berechnet, welches durch Subtrahieren des Widerstandsmoments ($T_r$) vom Antriebsmoment ($T_d$) erhalten wird, und
    einen Rollwinkel-Rechner (2f), der einen Rollwinkel ($\theta_y$) berechnet, wenn das Fahrzeug (10) fährt,

    wobei der statische Fahrzustand ein Zustand des Fahrzeugs (10) ist, das fährt, während es gleichzeitig seine Anhaltelage in einer Steigungsrichtung beibehält, und der dynamische Fahrzustand andere Fahrzustände als der statische Fahrzustand sind,
    wobei der Bestimmer (3) bestimmt, dass sich das Fahrzeug (10) im statischen Fahrzustand befindet, wenn ein Wert des Steigungseinflussmoments ($T_p$) innerhalb eines zweiten Bereichs liegt, und der Rollwinkel ($\theta_y$) innerhalb eines dritten Bereichs liegt, andernfalls der Bestimmer (3) bestimmt, dass sich das Fahrzeug (10) im dynamischen Fahrzustand befindet, und
    wobei Null innerhalb des zweiten Bereichs eingeschlossen ist, und
    wobei Null ebenfalls innerhalb des dritten Bereichs eingeschlossen ist.

2. Steuerung der optischen Achse des Kraftfahrzeugscheinwerfers nach Anspruch 1, wobei der Antriebsmoment-Rechner (2b) das Antriebsmoment (Td) auf der Basis eines Übersetzungsverhältnisses (R) eines Motors zu den Antriebsrädern und eines Motormoments (Te) berechnet, das vom Motor bereitgestellt wird.

3. Steuerung der optischen Achse des Kraftfahrzeugscheinwerfers nach einem der Ansprüche 1 bis 2, wobei der Antriebsmoment-Rechner (2b) das Antriebsmoment (Td) auf der Basis eines Motormoments (Tm) berechnet, das von einem Traktionsmotor bereitgestellt wird.

4. Steuerung der optischen Achse des Kraftfahrzeugscheinwerfers nach Anspruch 3, wobei der Antriebsmoment-Rechner (2b) das Antriebsmoment ($T_d$) auf der Basis des Motormoments ($T_m$) und eines Übersetzungsverhältnisses (Rm) des Traktionsmotors zu den Antriebsrädern berechnet.

5. Steuerung der optischen Achse des Kraftfahrzeugscheinwerfers nach einem der Ansprüche 1 bis 4,

wobei die Steuerung (4) es dem Einsteller (6) ebenfalls ermöglicht, den optischen Winkel einzustellen, wenn das Fahrzeug (10) angehalten ist.

## Revendications

1. Unité de contrôle d'axe optique d'un phare de véhicule présentant un ajusteur (6) qui ajuste un angle optique du phare de véhicule (5), **caractérisée en ce qu'**elle comprend :

   un calculateur de couple d'entraînement (2b) qui calcule un couple d'entraînement ($T_d$) appliqué aux roues d'entraînement d'un véhicule (10),
   une unité de détermination (3) qui détermine si le véhicule (10) est dans un état de conduite statique ou dans un état de conduite dynamique sur la base du couple d'entraînement ($T_d$),
   une unité de commande (4) qui permet à l'ajusteur (6) d'ajuster l'angle optique si l'unité de détermination (3) détermine que le véhicule (10) est dans l'état de conduite statique, et ne permet pas à l'ajusteur (6) d'ajuster l'angle optique si l'unité de détermination (3) détermine que le véhicule (10) est dans l'état de conduite dynamique,
   un calculateur de couple de résistance (2c) qui calcule un couple de résistance ($T_r$) lorsque le véhicule roule sur une base d'une vitesse de roue ($V_t$) du véhicule (10), le couple de résistance ($T_r$) augmentant en tant que valeur quadratique de la vitesse de roue ($V_t$),
   un calculateur de couple influençant le tangage (2d) qui calcule un couple influençant le tangage ($T_p$) obtenu par soustraction du couple de résistance ($T_r$) du couple d'entraînement ($T_d$), et
   un calculateur d'angle de roulis (2f) qui calcule un angle de roulis ($\theta_y$) lorsque le véhicule (10) roule,

   dans laquelle l'état de conduite statique est un état du véhicule (10) roulant tout en maintenant sa posture d'arrêt dans une direction de tangage et l'état de conduite dynamique consiste en des états de conduite autres que l'état de conduite statique,
   dans laquelle l'unité de détermination (3) détermine que le véhicule (10) est dans l'état de conduite statique si une valeur du couple influençant le tangage ($T_p$) est dans une deuxième plage et l'angle de roulis ($\theta_y$) est dans une troisième plage, autrement l'unité de détermination (3) détermine que le véhicule (10) est dans l'état de conduite dynamique, et
   dans laquelle zéro est inclus dans la deuxième plage, et
   dans laquelle zéro est aussi inclus dans la troisième plage.

2. Unité de contrôle d'axe optique du phare de véhicule selon la revendication 1,
   dans laquelle le calculateur de couple d'entraînement (2b) calcule le couple d'entraînement (Td) sur la base d'un rapport de changement de vitesse (R) d'un moteur aux roues d'entraînement et un couple moteur (Te) fourni depuis le moteur.

3. Unité de contrôle d'axe optique du phare de véhicule selon l'une quelconque des revendications 1 à 2,
   dans laquelle le calculateur de couple d'entraînement (2b) calcule le couple d'entraînement (Td) sur la base d'un couple moteur (Tm) fourni depuis un moteur de traction.

4. Unité de contrôle d'axe optique du phare de véhicule selon la revendication 3,
   dans laquelle le calculateur de couple d'entraînement (2b) calcule le couple d'entraînement ($T_d$) sur la base du couple moteur ($T_m$) et un rapport de changement de vitesse (Rm) du moteur de traction aux roues d'entraînement.

5. Unité de contrôle d'axe optique du phare de véhicule selon l'une quelconque des revendications 1 à 4,
   dans laquelle l'unité de commande (4) permet aussi à l'ajusteur (6) d'ajuster l'angle optique lorsque le véhicule (10) est à un arrêt.

FIG.1

# FIG.2

# FIG.3

# FIG.4

# FIG.5

**Optical axis controller** ~1

**Calculator** ~2

Change gear ratio calculator ~2a

Drive torque calculator ~2b

Resistance torque calculator ~2c

Pitch-influencing torque calculator ~2d

Travel distance calculator ~2e

**Determiner** ~3

**Controller** ~4

12~ Door sensor — P

13~ Height sensor — H

14~ Wheel speed sensor — $V_t$

15~ Accelerator pedal sensor — $\theta_{AC}$

16~ Engine speed sensor — $N_e$

Engine controller ~8 — $T_e$

Actuator ~6

ACC ON OFF IGN ~21

5  5b  5c  5a  6a

## FIG.6

Engine torque $T_e$

Engine speed $N_e$

Wheel speed $V_t$

Calculator ~2

Drive torque calculator ~2b

Change gear ratio calculator ~2a

Change gear ratio R

Drive torque $T_d$

2d

Resistance torque calculator ~2c

$T_r$ Resistance torque

Pitch-influencing torque calculator

$T_p = T_d - T_r$

Travel distance calculator ~2e

Travel distance L

Pitch-influencing torque $T_p$

Accelerator pedal operation amount $\theta_{AC}$

Binary signal P

Determiner

Running state

Static running state

Dynamic running state

Stopping state

~3

Vehicle height H

Controller ~4

## FIG.7

Second range

Dynamic running state

Static running state

Dynamic running state

$T_p < T_{pmin}$

$T_{pmin} \leqq T_p \leqq T_{pmax}$

$T_{pmax} < T_p$

$T_{pmin}$

0

$T_{pmax}$

$T_p$

Pitch-influencing torque

# FIG.8

```
                          ┌─────────┐
                          │  Start  │
                          └────┬────┘
                               ↓
  S10─┐                ┌─────────────────┐
                       │ Read in information │
                       └────────┬────────┘
                                ↓
  S12─┐              ╱─────────────────╲    No
                     ╲  Any door open ? ╱──────────┐
  S14─┐  Yes           ╲───────┬───────╱  S16─┐    ↓
   ┌──────────────┐     │            ┌──────────────┐
   │ Reset travel │     │            │Calculate travel│
   │distance L (L=0)│   │            │  distance L   │
   └──────┬───────┘     │            └──────┬───────┘
          │             ↓←──────────────────┘
  S18─┐   ╱──────────────────╲   No
          ╲ Drive torque Td=0 ?╱─────────┐
          ╲──────────┬───────╱  S28─┐    ↓
            Yes      │        ╱──────────────╲    No
             │       │        ╲    L=0 ?      ╱──────────────┐
             │       │        ╲───────┬──────╱  S32─┐        ↓
             │       │         Yes    │        ┌──────────────┐
             │       │     S30─┐      ↓         │  Calculate   │
             │       │    ╱──────────────╲ No   │drive torque Td│
             │       │    ╲Accelerator pedal╱───┐  └──────┬───────┘
             │       │    ╲    ON ?        ╱    │  S34─┐   ↓
             │       │    ╲───────┬──────╱      │  ┌──────────────┐
             │       │      Yes   │              │  │  Calculate   │
  S20─┐      │        ←───────────┘              │  │resistance torque Tr│
    ╱──────────────╲  No                         │  └──────┬───────┘
    ╲ Any vibration ?╱────────────┐              │  S36─┐   ↓
    ╲───────┬──────╱              │              │  ┌──────────────┐
      Yes   │                     │              │  │Calculate pitch-│
       │                          │              │  │influencing torque Tp│
       │                          │              │  └──────┬───────┘
       │              S44─┐       │         S38─┐ │         ↓
       │                  │       ↓    No    ╱──────────────────────╲
       │             ┌──────────────┐  ┌─────╲ Tpmin≦Tp≦Tpmax ?     ╱
       │             │  Adjustment  │  │     ╲──────────────────────╱
       │             │ unpermitted  │  │              Yes  │
       │             └──────┬───────┘  │                   │
       │                    ↓          │                   │
       │              ┌─────────┐      │                   │
       │              │ Return  │      │                   │
       │              └─────────┘      │                   │
  S22─┐ ↓←───────────────────────────────────────────────┘
   ┌──────────────┐
   │Calculate target│
   │ control value │
   └──────┬───────┘
  S24─┐   ↓
   ┌──────────────┐
   │Adjustment permitted│
   └──────┬───────┘
          ↓
    ┌─────────┐
    │ Return  │
    └─────────┘
```

FIG.9

| | Optical axis controller | ~1 |
|---|---|---|

19~ Rudder angle sensor — $\theta_{ST}$

20~ Yaw rate sensor — Y

12~ Door sensor — P

13~ Height sensor — H

14~ Wheel speed sensor — $V_t$

15~ Accelerator pedal sensor — $\theta_{AC}$

$N_e$

16~ Engine speed sensor

Optical axis controller ~1

Calculator ~2

Change gear ratio calculator ~2a

Drive torque calculator ~2b

Resistance torque calculator ~2c

Pitch-influencing torque calculator ~2d

Travel distance calculator ~2e

Roll angle calculator ~2f

Determiner ~3

Controller ~4

$T_e$

Engine controller ~8

Actuator ~6

5
5b
5c
5a
6a

ACC ON
OFF IGN ~21

# FIG.10

# FIG.11

Roll angle $\theta_y$

Dynamic running state | $\theta_{max} < \theta_y$

$\theta_{max}$

Third range

$T_p < T_{pmin}$

Static running state

Dynamic running state

$T_{pmin}$

$T_{pmax} < T_p$

$T_p$

$T_{pmax}$

Pitch-influencing torque

Dynamic running state

$\theta_{min}$

$T_{pmin} \leqq T_p \leqq T_{pmax}$
AND
$\theta_{min} \leqq \theta_y \leqq \theta_{max}$

$\theta_y < \theta_{min}$

Dynamic running state

Second range

## FIG.12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009248627 A

- US 6445085 B1